# EUROPEAN PATENT SPECIFICATION

(11) **EP 2 349 936 B1**
(45) Date of publication and mention of the grant of the patent: **07.09.2016**
(21) Application number: 09756533.7
(22) Date of filing: 13.10.2009
(51) Int. Cl.: C02F 3/08, C02F 3/10, C02F 3/34, C02F 1/66, C02F 103/10, C02F 103/16, C02F 3/00

(54) **PROCESS FOR EXTRACTING IRON FROM AN AQUEOUS ACID SOLUTION**
VERFAHREN ZUM EXTRAHIEREN VON EISEN AUS EINER WÄSSRIGEN SÄURELÖSUNG
PROCÉDÉ POUR EXTRAIRE DU FER D'UNE SOLUTION AQUEUSE ACIDE

(30) Priority: 13.10.2008 FI 20085962
(43) Date of publication of application: 03.08.2011
(73) Proprietor: Talvivaaran Kaivososakeyhtiö Oyj, 02170 Espoo (FI)
(72) Inventor: NURMI, Pauliina, FI-33820 Tampere (FI); KAKSONEN, Anna, FI-33820 Tampere (FI); PUHAKKA, Jaakko, FI-33230 Tampere (FI)
(74) Representative: Berggren Oy Ab
(86) International application number: PCT/FI2009/050822
(87) International publication number: WO 2010/043764

(56) References cited:
- JP-A- S62 282 698
- J.A. Puhakka: "High-Rate Fluidized-Bed Ferric Sulfate Generation for Hydrometallurgical Applications" Advanced Materials Research vol. 20-21, July 2007 (2007-07), XP009129766 Retrieved from the Internet: URL:http://www.scientific.net/AMR.20-21.54 > [retrieved on 2010-02-18]
- T. van der Meer et al: "Effect of fluidized-bed carrier material on biological ferric sulphate generation" Minerals Engineering vol. 20, no. 8, July 2007 (2007-07), pages 782-792, XP002569526 DOI: doi:10.1016/j.mineng.2007.02.002 Retrieved from the Internet: URL:http://www.sciencedirect.com/> [retrieved on 2010-02-18]
- Päivi H.-M. Kinnunen et al: "High-rate ferric sulfate generation by a Leptospirillum ferriphilum-dominated biofilm and the role of jarosite in biomass retainment in a fluidized-bed reactor" vol. 85, no. 7, 10 February 2004 (2004-02-10), pages 697-705, XP009129764 DOI: 10.1002/bit.20005 Retrieved from the Internet: URL:http://www3.interscience.wiley.com> [retrieved on 2010-02-18]
- D. Morin et al: "Progress after three years of BioMinE..." Hydrometallurgy vol. 94, no. 1-4, 6 June 2008 (2008-06-06), pages 58-68, XP002569510 Internet DOI: 10.1016/j.hydromet.2008.05.050 Retrieved from the Internet: URL:http://www.sciencedirect.com/> [retrieved on 2010-02-19]

## Description

### Field of the invention

The invention relates to a process for extracting and precipitating iron from an aqueous solution, and particularly to hydrometallurgical processes. The invention further relates to an apparatus for performing said extraction of iron.

### Background of the invention

Iron plays an essential role in hydrometallurgical processes where sulfide minerals such as pyrite and chalcopyrite are solubilized. Being inherently of frequent and abundant occurrence, iron is always present in mineral deposits together with valuable metals, and will typically be removed during hydrometallurgical processing and in the treatment of acid drainages from mines to the environment.

Dissolved iron is commonly removed for instance by chemical precipitation. It is known to remove dissolved iron as hydroxide by precipitation using lime or limestone, resulting however in a considerable waste gypsum problem.

Another alternative is to use biological iron removal. Combined biological and chemical iron removal may be used to reduce costs caused by chemicals, and the amount of waste produced.

In microbiological iron removal, bacteria oxidizing iron and sulfur compounds are utilized, said bacteria being inherently present in association with ores. Bacteria having activity in biological leaching typically grow in acid pH range of 1 to 3, and acquire their energy by oxidizing iron or inorganic sulfur compounds. Carbon necessary for bacterial growth is derived from atmospheric carbon dioxide. On the basis of optimum growth temperature, the bacteria may be classified into meso-philic bacteria, 25 to 40°C, such as *Acidithiobacillus ferrooxidans,* and thermophilic bacteria, 45 to 50°C, such as *Acidomicrobium ferrooxidans,* and thermophilic *Archaea,* 70 to 85°C. In bioleaching of sulfide ores, the bacteria may oxidize metal sulfides using ferric ions they produce:

Fe²⁺ + ¼ O₂ + H⁺ → Fe³⁺ + ½ H₂O

CuS + 8 Fe³⁺ + 4 H₂O → Cu²⁺ + 8 Fe²⁺ + SO4²⁻ + 8 H⁺

Further, ferric iron (Fe³⁺) produced by microbes acts in the solution as an oxidizing agent, thus contributing to chemical solubilization of metals from the respective ores. In this reaction, ferric iron will be reduced to yield again ferrous iron (Fe²⁺), which may be reoxidized by microbes to give the ferric form. After solubilization, it is preferable to remove ferric iron from the leaching liquid, and thus from the process, for instance by precipitation as hydroxide, jarosite, or goethite. Otherwise, for instance precipitation of jarosite on the minerals during bioleaching of sulfide minerals may prevent bacterial contact with mineral surface, and thus limit the reaction and mass transfer during oxidation.

In practice, biological iron removal has turned out to be a complicated and even inefficient process, particularly in industrial scale. A typical problem is a too high iron concentration, making it necessary to dilute the solution being treated, thus resulting in high volumes to be processed, or obstruction of the apparatus by iron to be separated, resulting in inefficient oxidation. Typically in apparatuses available, oxidation rates are too low, precipitation is unfavourable, or capacities or methods used therein are simply too modest for industrial scale operations and use.

A process for waste water treatment is known from the abstract of JP62282698 where ferrous iron and iron oxidizing bacteria are introduced into an oxidation tank, followed by the addition of calcium carbonate for the adjustment of pH in the range of 2.0-4.4. The process is assisted by agitation with air or by mechanical means. In this way, ferrous iron is oxidized to yield ferric iron, which is further precipitated as ferric hydroxide with calcium carbonate. After precipitation, the overflow is passed to a clarification tank where the precipitate is concentrated. This concentrated precipitate is circulated together with bacterial growth attached thereto, and unreacted calcium carbonate back to the oxidation tank.

Biological removal of iron from hydrometallurgical leach liquid using an agitated batch reactor is known (Indian patent application no. 1427/DEL/2004 available from Indian Patent Office upon request). Iron in the leach liquid is concurrently oxidized and precipitated in the presence of *Thiobacillus ferrooxidans* at the pH of 2.5 to 2.9, and at the temperature of 30 to 35°C, thus resulting in the oxidation of ferrous sulfate into ferric sulfate, and precipitation thereof in the mixing tank. Thereafter, jarosite compounds produced during precipitation are sedimented and separated by known separation methods. Used bacteria are circulated together with all the liquid, and the precipitation taking place in the tank, also on the walls thereof, results in a necessity to remove the precipitated product from the tank walls.

WO 99/01383 presents a process for oxidizing ferrous ions in dilute acid raw water to yield ferric ions, followed by chemical precipitation to give ferric hydroxide slurry, Fe(OH)₃, by elevating the pH to a sufficiently high value in the same process step. For efficient precipitation of ferric hydroxide, the pH value should be at least 3, preferably more than 5. It is also possible to carry out the reaction in a fluidized bed using fluidization with a gas flow, in the presence of calcium carbonate to neutralize the acid aqueous solution. The amount of ferrous ions in the feed solution is up to 5 g/l, preferably less than 4 g/l. Any sulfate in the feed solution is precipitated with calcium carbonate from the solution to yield gypsum. Processing of the poorly sedimenting ferric hydroxide precipitate is complicated, and moreover, a flocculant is also necessary for the precipitation thereof. Such precipitates tend to obstruct the process apparatuses. Solid matter contents of at least 5 g/l, preferably 50 to 200 g/l are a requirement for the process. Particle size of the solid matter should be less than 0.5 mm. In the process, sedimented precipitate is circulated to the start of the process. Microbes are easily detached from the surface of the carrier matter by bubbles of gas containing oxygen directly fed to the process step where microbes are present.

WO 02/072486 discloses a fluidized bed reactor having a fluidized bed portion and precipitation portion combined in the same apparative construction where all processes, biological oxidation, chemical precipitation and physical sedimentation are thus carried out concomitantly in the same reactor. Waste water is introduced into the fluidized bed/precipitation reactor operated continuously, however, no examples of the composition of said waste water being presented. The fluidized bed is fluidized by means of circulating stream of gas, i.e. air. It is mentioned in the publication that microbes present in the reaction may be ones oxidizing iron, however highest possible ferrous iron concentrations in feed solution are not mentioned. In case the feed solution contains iron, it will be precipitated in the reactor to yield ferric hydroxide or oxide, followed by sedimenting said precipitate to the bottom of the reactor, i.e. precipitation portion where it will be removed. There is a region between the fluidized bed portion and bottom portion where the carrier particles of the fluidized bed are partly mixed with the sedimenting ferric hydroxide slurry. Since the same reactor comprises both the biological oxidation and the precipitation (and the intermediate region), it is not possible to optimize the process with respect to any of the single stages. Used high pH value, even as high as 12, results in high demand of precipitating chemicals. Moreover, circulation of the gas containing oxygen in the fluidized bed is not favourable for the activity of the microbial mass.

The article of Omura, T. et al., Biological oxidation of ferrous iron in high acid mine drainage by fluidized bed reactor, Wat. Sci. Tech., Kyoto 1991, pages 1447-1456, presents computations that may be applied for modelling the oxidation of ferrous iron present in acid mine drainage waters to yield ferric iron in a fluidized bed reactor containing *Acidithiobacillus ferrooxidans* bacteria on Amberlite IRA-938 carrier. Fluidized bed having microbes is fluidized with air. According to the publication, an oxidation of 90% was attained at a flow rate of 0.75 to 4.5 l/h, and at a concentration of ferrous iron of 1 g/l. In the process, the separation of the solution and precipitate is carried out in a fluidized bed, thus yielding ferric hydroxide precipitate that remains in the fluidized bed. Due to obstructions caused by ferric hydroxide, the pH must be adjusted to a value below 2, even though in theory, the precipitation should only start at a pH of more than 2.5. As the pH was higher than 2 in the experiment performed in the publication, ferric hydroxide was found to be immediately precipitated on the carrier surface, and the experiment had to be interrupted. Circulation of the solution in the reactor system used was not described.

J.A. Puhakka et al. "High-Rate Fluidized-Bed Ferric Sulphate Generation for hydrometallurgical Applications" in Advanced Materials Research vols. 20-21 (2007), pages 54-57 discloses high iron oxidation rates, over 26 kgm⁻³h⁻¹, obtained in a fluidized bed reactor using *Leptospirillum ferriphilum* culture. Simulated heap leaching solutions including ferrous sulphatecould be oxidized at pH below 1. The performace of fluidized bed reactor was found to decrease when pH was increased. Jarosite precipitating on the activated carbon carriers inside the reactor played an important role in the fluidized bed biomass retainment. An apparatus consisting of a fluidized bed reactor, aeration unit, and possibly a settling tank, is disclosed.

T. van der Meer et al. "Effect of fluidized-bed carrier material on biological ferric sulphate generation" in Minerals Engineering vol. 20 (2007), pages 782-792 utilises an apparatus referred to in Puhakka et al. and discloses more detailed experiments and results on different carrier materials.

P., H.-M. Kinnunen et al. "High-rate ferric sulphate generation by a Leptospirillum ferriphilum-dominated biofilm and the role of jarosite in biomass retainment in a fluidized-bed reactor" vol. 85 (2004), pages 697-705 utilises an apparatus referred to in Puhakka et al. and discusses in more detail the role of jarosite precipitates accumulated on the top of the activated carbon biomass carrier material inside the fluidized bed reactor which enhances biomass retainment.

The aim is a quick and efficient removal of iron in industrial scale from aqueous acid solutions containing ferrous ions by the process of the invention.

Further, the process of the invention allows for the elimination of the technical problems associated with large scale processes described above.

### Brief description of the invention

The present invention relates to a process according to claim 1 for the removal of iron from aqueous acid solution containing ferrous ions.

The invention further relates to an apparatus according to claim 11 for performing said process.

It was found that the iron content of an acid solution rich in ferrous irons from a hydrometallurgical process, for instance from biological heap leaching, may be quickly and efficiently lowered by passing the solution through a treatment apparatus comprising a fluidized bed and a concentrator. The solution to be treated containing ferrous iron is first biologically oxidized in a separate fluidized bed reactor to obtain ferric iron, followed by introducing the ferric iron solution to a concentrator where the ferric iron compound is precipitated and may thus be removed from the apparatus as solid matter.

With the process and apparatus of the invention, very quick and efficient iron removal, high precipitation capacity and superior properties of the precipitate are achieved. Moreover, the process used is flexible and applicable for solutions with very different properties. In addition to iron, also sulfates may be removed from solutions such as waste waters using this process. In the invention, oxidation of iron by microbes and precipitation of oxidized iron are separate unit operations that may be separately optimized without compromises. In the process of the invention, the microorganisms oxidizing iron are attached to the surface of the carrier material, thus attaining considerably higher biomass concentrations and accordingly higher oxidation rates of iron than earlier. Moreover, waste waters containing considerably higher amounts of iron may be treated with the process of the invention in comparison to waters that could be treated with processes described in the prior art.

The process of the present invention is considerably more efficient than the process described e.g. in the document JP62282698. Waste waters containing significantly higher amounts of iron, such as 15 g of Fe²⁺/l or higher, may be treated with the process of the invention, whereas waste water containing iron no more than 0.120 g of Fe²⁺/l could be treated with the process described in the document JP62282698. An advantage of the process of the invention is also that iron is not precipitated as hydroxide, for instance in the form of Fe(OH)₃, which is amorphous and very finely distributed, making the separation thereof from a solution difficult. In the process of the invention, no mechanical agitation is necessary in the biological unit operation.

The process of the present invention is considerably more efficient and may be applied more widely than the process described for instance in the Indian patent application no. 1427/DEL/2004. Solution to be treated may be introduced into the reactor with a higher speed, and ferrous iron concentrations of the feed solution may be significantly higher. In addition, temperature and pH ranges, in which the process of the invention may be performed, are wider. Bacteria utilized in the invention, such as *Leptospirillum ferriphilum,* tolerate considerably higher ferric concentrations than for instance *Acidithiobacillus ferrooxidans* bacteria. Higher iron removal efficiency is a further advantage of the process of the invention.
Figure 1 schematically shows a treatment apparatus of the invention.
Figure 2 shows the variation of the oxidation rate of ferrous ions and oxidation efficiency during an experimental stage (Example 1).
Figure 3 shows the variation of the oxidation rate of ferrous ions and oxidation efficiency during an experimental stage (Example 2).
Figure 4 shows the oxidation rates of ferrous ions, and oxidation efficiencies after adjusting the pH of the solution downstream of the fluidized bed to a value between 2.5 and 3.5 (KOH), and a value between 3.2 and 2.8 (CaCO₃).
Figure 5 shows the variation of the amount of precipitated iron and precipitation efficiency during an experimental stage (Example 1).
Figure 6 shows the variation of the amount of precipitated iron and precipitation efficiency during an experimental stage (Example 2).
Figure 7 shows the precipitation of ferric ions and precipitation efficiency after adjusting the pH of the solution downstream of the fluidized bed to a value between 2.5 and 3.5 (KOH), and a value between 3.2 and 2.8 (CaCO₃).
Figure 8 shows the analysis of the precipitated product indicating that the solid phase mainly contains jarosite.

### Detailed description of the invention

In the process according to the first aspect of the invention, an acidic acqueous solution containing ferrous ions is treated. This solution to be treated may substantially be any solution fulfilling said criteria. The solution to be treated is preferably selected from the group consisting of an acidic aqueous or process solution from the treatment of polluted soil, solution produced in the treatment of industrial waste streams, or waste materials containing metals, and a solution produced in a hydrometallurgical process. More preferably, the solution is a solution stream from a hydrometallurgical, or biological hydrometallurgical leaching process, most preferably a solution stream containing high amounts of iron and other metals from a biological hydrometallurgical leaching process, since the process of the invention is particularly efficient for iron removal, and since the solutions in question are acid and contain bacteria that oxidize iron and nutrients necessary for the growth thereof. In addition to iron, these solutions typically contain nickel, cobalt, zinc, copper, manganese, magnesium, aluminium, sodium, calcium, and anions such as sulfates. Particularly preferably, the solution itself contains nutrients necessary for the growth of biomass, thus obviating the separate addition thereof.

According to a preferable embodiment, the acidic aqueous solution containing ferrous ions also contains compounds of sulfur, preferably in the form of sulfate ions.

According to another preferable embodiment, the aqueous solution to be treated is obtained from the recovery of metals from ores by heap leaching. Bacteria oxidizing iron and sulfur such as *At. ferrooxidans* naturally grow on ore surfaces and drainage waters from ore heaps. They are typically indigenous microbes of the regional biological heap leaching site, and thus well adapted to local environmental conditions.

According to an embodiment, cultivation broth is added to the aqueous solution being treated, with the purpose of assisting in the growth of the biomass used for oxidation. Said cultivation broth preferably contains trace substances necessary for the biomass. Said cultivation broth is more preferably a sulfuric acid solution with a pH of 0.5 to 4.0, according to the application purpose, and contains ammonium sulfate, sodium sulfate, potassium chloride, potassium hydrogenphosphate, magnesium sulfate, and calcium nitrate. Need of chloride, calcium and nitrate in the cultivation broth is questionable, but they may be added if necessary. Most preferably, 9K medium known in the art is added as the cultivation broth, containing ammonium sulfate for instance about 3 g/l, sodium sulfate for instance about 1.5 g/l, potassium chloride for instance about 1.5 g/l, potassium hydrogenphosphate for instance about 0.05 g/l, magnesium sulfate for instance about 0.5 g/l, and calcium nitrate for instance about 0.01 g/l. Moreover, cultivation broth may also contain ammonium hydrogenphosphate for instance about 0.350 g/l, potassium carbonate for instance about 0.050 g/l, and magnesium sulfate for instance about 0.050 g/l.

The feed solution to be introduced in the fluidized bed may contain valuable metals, or valuable metals may be removed from the solution prior to the treatment thereof by the process of the invention.

For the treatment by the process of the invention, the adjustment of the pH value of the fresh feed solution is generally not necessary. The pH of the feed solution to be introduced in the fluidized bed is preferably between 0.1 and 7, more preferably between 0.5 and 7, most preferably between 0.5 and 5. Substantial pH adjustment is performed upstream of the concentrator. Due to extremely high flow rates the pH of the solution in the apparatus will become uniform and is almost equal throughout the apparatus, such as in the reactor. If necessary, the pH may be adjusted with known chemicals for pH adjustment such as sulfuric acid or a caustic agent.

A general advantage of the invention is the fact that the available pH range is wide. In a conventional biological treatment, the pH is typically restricted to values between 1.5 and 3.0 to guarantee the activity of the biological material used and to avoid detrimental conditions. In the process of the invention, a more flexible pH range suitable for the solution to be treated may be used due to the possibility for effective local dilution of the solution to be oxidized and for controlling the progress of the solution, i.e. flow rate in the treatment apparatus. This reduces the need to control the pH, and thus expenses.

A feed solution with a high iron content generally causes problems in conventional hydrometallurgical processes where iron may not be removed efficiently enough. Reduction of the concentration results in the need to use larger and more uneconomic apparatuses and/or higher amounts of the solution to be treated. With the process of the invention, it is possible to treat even solutions containing high amounts of dissolved iron. Concentration of ferrous iron in the acidic feed solution according to the invention is preferably 30 g/l or less, more preferably from 3 to 30 g/l, most preferably from 3 to 20 g/l, such as from 9 to 15 g/l. Iron concentrations and contents of the feed solutions to be treated typically depend on the mineralogy of the ore, and may vary widely among different deposits. For this reason, the flexibility considering the composition of the feed solution obtained with the process of the invention is an advantage, thus allowing for the use of the process in many different operation environments.

In the process of the invention, iron is removed from the acid aqueous solution containing ferrous ions at least by the following steps:
In the first step (a), the acid aqueous solution containing ferrous ions, that is, the solution to be treated, is introduced in the fluidized bed reactor where the ferrous ions are oxidized preferably by microbes to give ferric ions, the solution flowing through the fluidized bed of the reactor with a rate sufficient to provide efficient fluidization and mixing. In the second step (b), the solution from step (a) substantially containing ferric ions is passed to a concentrator where a sulfuric compound containing ferric ions is allowed to precipitate from the solution to yield solid matter, followed by the recovery of the solid matter thus obtained, containing ferric ions. In the fluidized bed reactor, an efficient biological oxidation of iron is achieved. Preferably in the biological oxidation, microbes oxidizing ferrous ions to give ferric ions are attached to the surface of a carrier material. The bed composed of the carrier material is fluidized and mixed by a sufficient amount of a solution flowing upwards, preferably by the solution being circulated in the apparatus of the invention and being pumped into the fluidized bed reactor.

The expression "sufficient rate" in step (a) refers to the flow rate of the solution obtained when the overflow from the concentrator, the amount thereof being for instance 6 to 650 fold compared to that of the feed solution, is combined with the feed solution, and the amount of solution thus obtained, that is, "sufficient amount" is passed through the fluidized bed. The rate of flow of the solution through the fluidized bed is maintained effective to achieve an efficient oxidation process and to prevent the oxidized compound from precipitating already in the fluidized bed reactor. A sufficient rate of flow of the solution through the fluidized bed refers to the flow rate preventing local concentrations for instance on the microbes or next to them from getting too high, the kinetics of precipitation being slow enough with respect to said rate of flow of the solution through the bed, precipitation in the fluidized bed being thus substantially avoided.

In case the solution combined with the fresh feed solution is efficiently circulated and sufficiently diluted in the fluidized bed, any toxic effects on the microbes of the bed are avoided. At the same time, the fluidized bed is maintained free from any precipitations, thus reducing necessary maintenance and problems and costs associated therewith.

The feed solution to be introduced upstream of the fluidized bed is also diluted by the solution circulated with high rate, and accordingly, separate dilution of the solution to be treated is no longer necessary prior to feeding in the process.

Sufficient amount of the solution refers to the solution obtained by circulating the solution already depleted of iron compounds upwards in the fluidized bed and by introducing fresh feed solution to the reactor. Then the total amount of solution passing through the fluidized bed is high, from 6 to 650 fold compared to the amount of fresh feed solution. In smaller scale operation, such as in laboratory or a pilot plant, a preferable amount is from 150 to 650, most preferably from 150 to 320 fold with respect to the amount of fresh feed solution. For a large industrial scale, those skilled in the art are able to estimate a rough approximation of the total amount of solution on the basis of experiments carried out in a laboratory or a pilot plant. More preferably, the amount for the industrial scale is from 7 to 150, most preferably from 9 to 150, such as from 9.5 to 50 fold compared to the amount of fresh feed solution to prevent the total amount to be circulated from becoming excessively high, and further, to be able to perform the circulation in an economically feasible manner using reasonable apparatuses and with reasonable costs. At the same time, the rate of flow through the fluidized bed becomes sufficiently high, the term "sufficient" being defined above.

The difference between the volumes of the fluidized bed during shut down and operation, respectively, is illustrated by fluidization ratio. Preferably for the inventive fluidization, said fluidization ratio is between 20 and 40%, preferably between 25 and 35%, most preferably about 30%. Mass transfer thus achieved is particularly efficient due to high reactive surface area of the biofilm obtained. With this arrangement, also the so-called channel flow and obstruction may be avoided, as opposed to other constructions.

Fresh feed solution to be treated, containing iron, is mixed with the solution circulated by pumping with high velocity.

According to a preferable embodiment, the rate of flow through the fluidized bed is between 30 and 50 l/h, preferably between 35 and 45 l/h, for a laboratory scale.

According to another preferable embodiment, the rate of flow through the fluidized bed is between 700 and 1100 l/h, preferably between 750 and 1050 l/h, for a pilot plant scale.

Preferably, the rate of feeding of the fresh solution to the reactor is at least 0.1 l/h, more preferably at least 2.4 l/h, most preferably at least 4.8 l/h, such as 9.6 l/h. In this case, the theoretical residence time (HRT) of iron present in the fresh feed solution in the fluidized bed is less than 4 h, preferably less than 3 h, more preferably less than 1 to 3 h for instance for a pilot scale plant comprising a reactor with a total volume of 14 l, and a fluidized bed with a volume of 9.3 l during fluidization.

If necessary, the solution flowing through the fluidized bed reactor may be heated. Preferably, the temperature of the solution is adjusted to a value between 15 and 45°C, more preferably between 30 and 40°C.

The pH value of the circulated solution is adjusted downstream of the fluidized bed, prior to passing to the concentrator. If necessary, the pH may be adjusted by the addition of chemicals for pH adjustment known for this purpose, such as sulfuric acid, or a caustic agent, preferably a caustic agentAfter the adjustment, the pH value of the solution being passed to the concentrator is more than 2, most preferably more than 2.5. The pH is maintained below 4, more preferably below 3.5, such as between 2 and 3.5, or 2.5 and 3.5, most preferably below 3, such as between 2 and 3, or 2.5 and 3. Precipitation is made more efficient by elevating the pH, resulting however to increased consumption of chemicals for pH adjustment. As said above, it is not always necessary to adjust the pH of the solution introduced in the fluidized bed, since a reasonably wide pH range is acceptable in the process for the solution to be treated. However the pH of the solution passed into the precipitation reactor should be adjusted to be in the range allowing for the precipitation of the iron compound containing sulfur.

No gas is introduced in the fluidized bed for fluidization. The fluidization is achieved by liquid flow consisting of a mixture of the fresh feed solution and circulated solution. Either solution or both of them may be oxidized either separately or together, preferably aerated prior to passing the solution to the fluidized bed. It is desirable to avoid gas fluidization since microbial mass is detached from the carrier material by gas flow, which is detrimental to the operation of the fluidized bed.

According to a preferable embodiment, there is a separate aeration tank upstream of the fluidized bed for aerating the solution prior to the introduction thereof in the fluidized bed.

The efficiency of oxidation of the ferrous solution is in the range of more than 90%, preferably 95%, more preferably 96%, most preferably 97% or above, such as more than 99%. The oxidation rate is between 1 and 8.5 g/l·h, preferably between 3.3 and 7 g/l·h, most preferably between 4 and 7 g/l·h. In this case the amount of ferrous ions migrating from the reactor to the precipitation step will be very low, preferably less than 0.1 g/l. Oxidation is also seen from the increase of the redox potential, the potential of the solution leaving the reactor being preferably more than 450 mV. While the amount of dissolved oxygen in the solution may remain at the level sufficient for the maintenance of microbial activity, it is preferable to introduce in the reactor additional oxygen by aeration, if necessary. In the mass transfer of oxygen, a value of 35 kg O₂/m³·d or less is attained. More than 85% of the amount of ferric iron in the feed solution may be precipitated therefrom, preferably more than 90%, more preferably more than 95%.

According to a preferable embodiment, glass beads or bodies of ceramic material are used on the bottom of the reactor to promote the even distribution of the liquid flow and/or to prevent the carrier material from leaving the reactor.

The suitable carrier material should have a high specific surface area, a high porosity, and further, be sufficiently inert for the application purposes in question. In the process of the invention, typical carrier materials suitable for biomasses are used. Preferably, the carrier is activated carbon, diatomaceous earth, such as celite, alumina, or another suitable ceramic material. More preferably, the carrier material is activated carbon due to maximum surface area attained.

According to the process of the invention, microbes that may be attached on the carrier are preferably used in the fluidized bed reactor. Said microbes may belong to a bacterial strain well suited for the conditions in question, such as acidophilic bacterial strain oxidizing iron. The bacteria may be any bacteria useful for the oxidation of iron under acidic conditions. The bacteria may preferably be selected from the group consisting of *Acidithiobacillus ferrooxidans, Leptospirillum ferrooxidans, Acidimicrobium ferrooxidans,* and *Leptospirillum ferriphilum.* Most preferable are the bacteria of the species *Leptospirillum ferriphilum* tolerating particularly high ferric iron concentrations. Local occurrence may serve as a criterion for the selection of the bacterial species; in this case, it is preferable to favour populations inherent in and to be enriched from the hydrometallurgical process, mine drainage water, or the environment of the application site, given the assumed acclimatisation to the local conditions.

Once the oxidized solution is removed from the fluidized bed, the total amounts of the carrier material and microbes substantially remain therein.

In the second step of the process of the invention, the solution substantially containing ferric ions, obtained from the fluidized bed used in the first step, is passed to the concentrator for the precipitation of a compound containing ferric ions from the solution to yield solid matter, followed by the recovery of said solid matter containing ferric ions thus obtained.

The precipitation is performed in the concentrator where the precipitating solid matter of the solution is sedimented during a sufficient residence time. The concentrator is a device for the separation of the precipitate from the mother liquor by gravity. Mother liquor is removed from the concentrator in the form of a clear overflow, while the solid matter to be removed, the precipitate, will be enriched in the bottom product. The precipitate formed is recovered via a valve on the bottom of the concentrator, whereas the settled liquid phase such as the overflow is passed to subsequent treatments. The precipitate thus formed is readily sedimented without the need of precipitation aids such as flocculating agents, which cause extra costs and environmental loads.

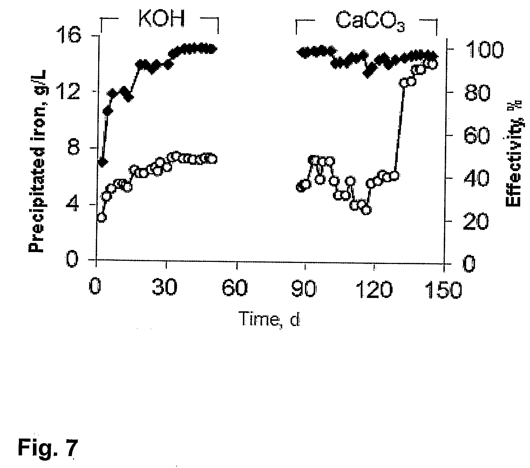

The feed solution contains sulfur compounds, particularly in the form of sulfates. Ferric ions are then precipitated from the solution in the form of compounds of iron with sulfur in the known manner, and thus compounds of sulfur containing iron, preferably ferric sulfate, more preferably jarosite, are present in the solid matter recovered. Besides iron, also sulfur is removed from the solution, without the need of any additional aids to bind iron. Iron may be preferably precipitated in the form of Na, K, NH₄ or hydronium jarosite. Typically, precipitated ferric iron is a solid solution consisting of different types of jarosites. Most preferably, jarosite precipitation is carried out according to Figure 7 as sodium jarosite. Relatively high sodium concentrations in the solution to be treated, or use of caustic agents for pH control are required for this precipitation. Quick precipitation in the form of either potassium or ammonium jarosite may be performed equally, and thus the composition of the jarosite may be adjusted by the concentrations of monovalent cations.

The temperature during the precipitation is below 70°C, preferably below 60°C, most preferably below 37°C, such as between 30 and 37°C. The retention time in the precipitation is preferably between 0.5 and 1.5 h, more preferably about 1 h for laboratory scale, and between 2.5 and 3.5 h, more preferably about 3 h, for pilot scale, and the precipitate thus obtained will be readily separated and sedimented. Sludge volume index, SVI, illustrating the sedimenting ability of the precipitate, varies between 3 and 45 ml/g, preferably between 5 and 30 ml/g, according to the experimental conditions.

The solution leaving the fluidized bed is passed to pH adjustment, carried out in a separate unit or tank for pH adjustment. Precipitation of ferric iron may be enhanced and the quality of the precipitate obtained may be improved by elevating the pH of the solution. Adjustment of the pH value may be carried out in a known manner, for instance by using an automatic titration apparatus. As the pH adjusting agent to be added, compounds suitable for this purpose, preferably bases, more preferably sodium hydroxide, potassium carbonate, or potassium hydroxide solution may be used, most preferably potassium carbonate slurry. The pH adjusting agent is added in a separate tank with efficient mixing. The residence time of the solution in this step is sufficient, preferably less than 1 hour, more preferably less than 40 min, most preferably less than 10 min, such as between 5 and 10 min to mix the adjusting agent with the solution to be treated in a sufficiently uniform manner, and to enable a sufficiently completed reaction between the two.

Liquid phase from the precipitation step is preferably passed to aeration. Microbes oxidizing iron are aerobic, and thus require oxygen to be active. The aeration is carried out using a gas containing oxygen, preferably using air or pure oxygen, most preferably using pure oxygen. For the aeration, the solution is preferably passed to a separate aeration tank for feeding the gas containing oxygen in the form of small bubbles to the solution to be aerated, for instance through a sintered means or another suitable manifold for distributing a gas stream to perform an oxidation with maximum uniformity and efficiency. Preferably, the solution to be treated, most preferably comprising both the feed and the circulated solutions, is aerated prior to the introduction thereof in the fluidized bed in step (a).

Further, according to a preferable embodiment, the solution obtained after step (b), depleted of ferric ions, preferably the aerated solution is partly or totally circulated in the same process in question or in a different process. Preferably the solution in question, preferably the aerated solution, is substantially circulated back to the feed of the fluidized bed reactor in step (a), that is, the solution is continuously circulated in the apparatus. Preferably, the solution obtained after step (b), the circulated solution, is circulated back to step (a), while removing the solution from the process at a rate equal with the rate of feed of the solution to the process. Substantially no solid matter, such as sludge containing ferric iron and sulfur, is present in the circulated solution, the content of solid matter being below 1% by weight.

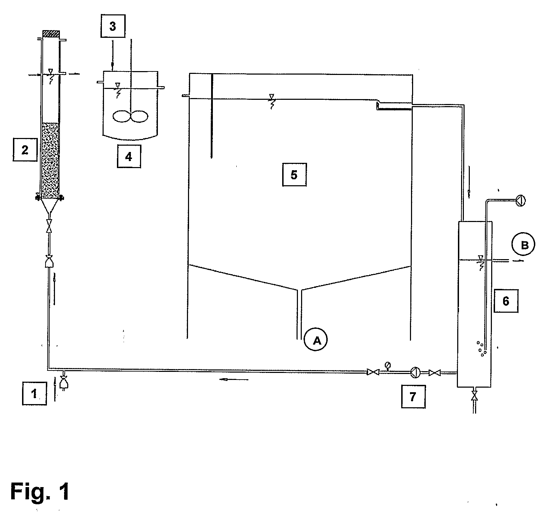

Figure 1 shows a preferable embodiment of the present invention where the feed solution 1 is first passed to the fluidized bed reactor 2 of the treatment apparatus for the oxidation of ferrous iron. From the fluidized bed, the oxidized ferric iron is introduced to pH adjustment 3, and further, to mixing tank 4. From the mixing tank, the ferric iron solution is passed to the concentrator 5 for sedimenting the precipitating ferric compound on the bottom of the tank, followed by recovery thereof through the valve A. The overflow of the tank is passed to the aeration unit 6, followed by substantial circulation thereof via the valve 7 back to the feed stream of the fluidized bed 2. If necessary, part of the aerated solution B may be removed from the aeration unit.

The process of the invention may be used for the treatment of any acid solution containing ferrous iron to recover iron and/or to lower the iron content of the solution. Preferable applications are directed to the treatment of acid aqueous and process solutions produced in the decontamination of polluted soil, industrial waste streams, or waste materials containing metals, or the treatment of solution streams from hydrometallurgical or biohydrometallurgical leaching processes. More preferably, the process is applied to solution streams from hydrometallurgical or biohydrometallurgical leaching processes, most perferably solution streams containing high amounts of iron and other metals, and sulfates.

The process of the invention may also be a part of a system for iron precipitation in a hydrometallurgical application, according to the desired processing parameters, and final result, need of iron removal, or the amount of iron. Preferably, the process may be used in combination with chemical precipitation.

According to another aspect of the invention, a treatment apparatus according to claim 14 is provided for removing iron from an acid aqueous solution containing ferrous ions.

The apparatus of the invention comprises at least one fluidized bed reactor suitable for the oxidation of ferrous ions to give ferric ions, and resistant to the acidity of the solution to be treated. Preferably, said fluidized bed comprises carrier materials described above, more preferably activated carbon, and microbes necessary for the oxidation reaction, most preferably *Leptospirillum ferriphilum* bacteria. Means necessary for the operation of the fluidized bed are known in the prior art.

Moreover, at least one concentrator is present in the apparatus of the invention for the precipitation of the ferric ions from the solution to give solid matter, which is recovered. The concentrator is consistent with the prior art.

Further, the apparatus of the invention comprises means for efficient circulation of the solution in the apparatus.

These parts of the apparatus are separate functional units where conditions may be adjusted independently. Thus, each process step may be performed under conditions that are typical and optimal for said step.

In addition to the fluidized bed reactor, concentrator, and means for the circulation of the solution, the apparatus also comprises means for the adjustment of pH and mixing. They are preferably located between the fluidized bed and precipitation tank. More preferably, the means for mixing the solution are located in the unit for pH adjustment.

Means for aeration of the solution, such as the aerating unit, is preferably connected to the outlet of the precipitation tank upstream of any circulation of the solution to the fluidized bed and/or immediately upstream of the fluidized bed.

The apparatus of the invention is preferably operated continuously. In this case, circulated, purified solution is removed, if necessary.

With the process and apparatus of the invention, quick and efficient iron removal from the solution to be treated is achieved. By elevating the ferrous iron content in the feed solution, the oxidation rate of iron may be increased, whereas the adjustment of pH of the circulating solution allows for the optimization of the precipitation of ferric iron. Further, by controlling the circulation rate of the liquid phase, flexibility in the treatment of different feed solutions is achieved.

The invention is illustrated with the following examples, without wishing to limit the scope thereof.

### Examples

In the experiments of the examples, the concentration of ferrous ions is assayed by spectrophotometric means (Shimadzu UV 1601, Japan) for laboratory scale and with the Novaspec II instrument (Pharmacia, Sweden) for pilot plant experiments, using a colorimetric ortho-phenanthroline method. If necessary, similar suitable instruments known in the art for colorimetric or spectrophotometric determination of absorbance may be used.

The oxidation rate in the fluidized bed is calculated as the difference between the ferrous iron contents in the feed solution and the effluent of the fluidized bed, respectively, based on the feeding rate for the volume of fluidized bed of activated carbon.

Total concentration of dissolved iron is assayed by atomic absorption spectrophotometry (Perkin Elmer 1100 USA), and optical emission spectrometry (Optima 2100 DV, Perkin Elmer, USA). The amount of precipitated ferric iron in g/l is calculated as the difference between the total amounts of ferric iron in feed solution and effluent, respectively. Precipitation rate is also expressed in g/day for laboratory experiments. Precipitation efficiency is calculated as the percentage of ferric iron of the total amount of ferrous iron in the feed.

pH and the redox potential are determined using the instrument WTW pH 315i (WTW, Germany), and Orion 3 Star (Thermo), while dissolved oxygen is determined with the instrument WTW OXI96 (Weilheim, Germany) and LDO HQ10 (Hach, USA).

If necessary, similar instruments known in the art suitable for the assays described above may be used.

### Example 1

In laboratory scale experiments, a fluidized bed is used, comprising activated carbon as the carrier (Calgon Carbon Filtrasorb 200), and biomass oxidizing iron, *Leptospirillum ferrophilum,* on the surface thereof. The temperature of the reactor is 37°C, the total volume of the fluidized bed reactor is 500 ml, the volume of the fluidized bed being 340 ml during fluidization. Retention time in the fluidized bed is two hours. A unit for pH adjustment with a volume of 4.5 l is connected to the fluidized bed. After the retention time in the adjustment unit of 7 min, the solution is passed to the precipitation unit. The volume of the precipitation unit is 40 l, the retention time of the solution to be precipitated in said unit being one hour. The apparatus is continuously operated.

Ferrous ion content of the solution introduced in the reactor is 14 g/l, the rate of pumping of said solution to the reactor being 0.17 l/h. Total amount of the solution passing through the fluidized bed is about 200 times higher than that of the fresh feed. pH of the solution is adjusted to a value of 2.8 using aqueous calcium carbonate slurry. Redox potential of the feed solution is from 330 to 350 mV.

The overflow of the precipitation unit is passed to aeration by air. The aerated solution is circulated to the feed of the fluidized bed.

As the result, 99.7% of the ferrous ions are oxidized at an oxidation rate of 7 g of Fe²⁺/l·h, and 96% of the ferric ions generated are precipitated in the form of jarosite, at the rate of 55 g/day. Redox-potential of the solution leaving the fluidized bed was between 470 and 510 mV, whereas the amount of dissolved oxygen remained in the range of 4.6 ± 0.8 g/l.

### Example 2

Under pilot plant conditions, a fluidized bed reactor is used, comprising activated carbon as the carrier (Calgon Carbon Filtrasorb 200), and biomass oxidizing iron *(L. ferriphilum),* on the surface thereof. The temperature of the reactor is 37°C. The total volume of the fluidized bed reactor is 14 l, the volume of the fluidized bed being 9.3 l during fluidization. Retention time of the solution in the fluidized bed is three hours. A unit for pH adjustment with a volume of 70 l is connected to the fluidized bed, the retention time of the sludge in said unit being 4.3 min. From the unit for pH adjustment, the solution is passed to the precipitation unit having a volume of 2.9 m³, the retention time of the solution in said unit being 2.9 hours.

Ferrous ion content of the solution introduced in the reactor is 7 g/l, the rate of pumping of said solution to the reactor being 3.2 l/h. Total amount of the solution passing through the fluidized bed is about 300 times higher than that of the fresh feed. pH of the solution is not specifically adjusted, the pH value being approximately 2.3.

As the result, 99.8% of the ferrous ions are oxidized at an oxidation rate of 1.9 g of Fe²⁺/l·h, and 85% of the ferric ions generated are precipitated in the form of jarosite.

### Example 3

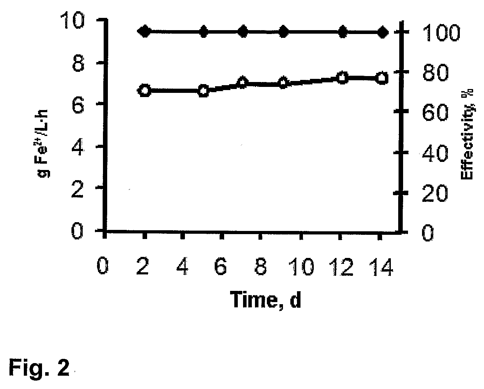

With the experimental arrangement of Example 1, oxidation rates of ferrous ions and oxidation efficiencies shown in Figure 2 are attained when the pH of the solution is adjusted using CaCO₃.

### Example 4

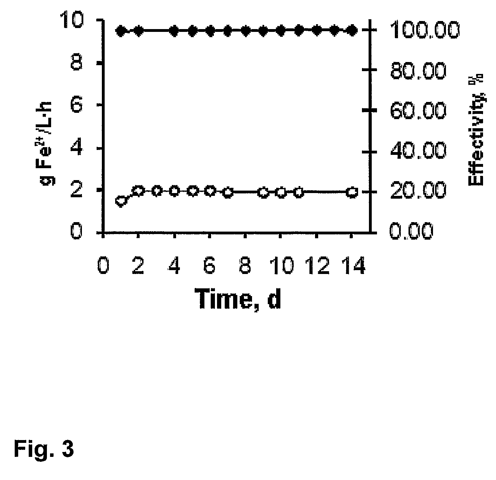

With the experimental arrangement of Example 2, oxidation rates of ferrous ions and oxidation efficiencies shown in Figure 3 are attained.

### Example 5

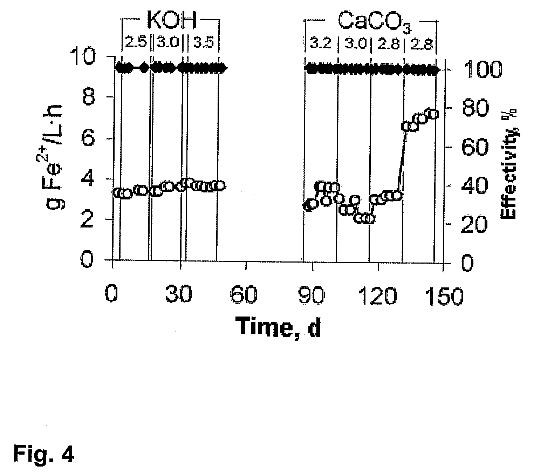

With the experimental arrangement of Example 1, with the exception that the Fe²⁺ content of the feed solution varies, and both KOH and CaCO₃ are used for pH adjustment of the solution, oxidation rates of ferrous ions and oxidation efficiencies shown in Figure 4 are attained.

### Example 6

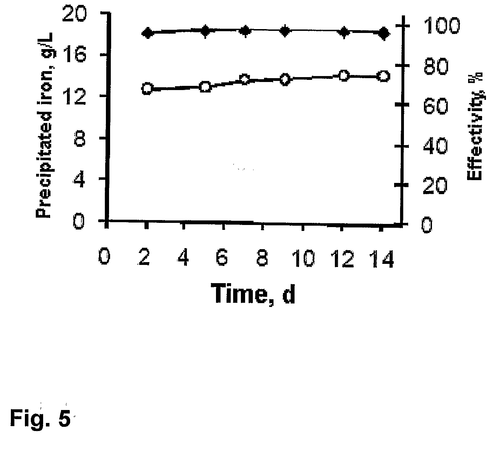

With the experimental arrangement of Example 1, variations of the amount of precipitated iron and precipitation efficiency, respectively, shown in Figure 5 are attained in case the pH of the solution is adjusted using CaCO₃.

### Example 7

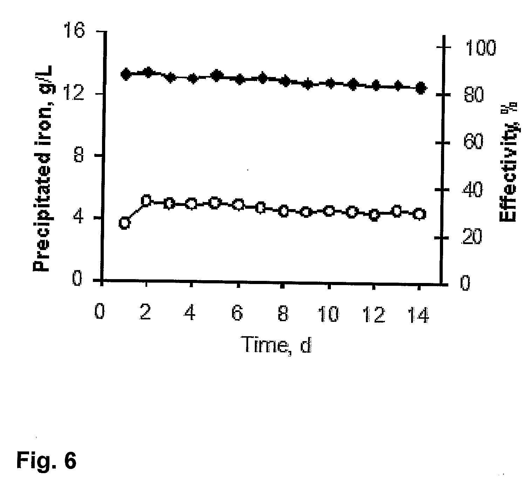

With the experimental arrangement of Example 2, variations of the amount of precipitated iron and precipitation efficiency, respectively, shown in Figure 6 are attained.

### Example 8

With the experimental arrangement of Example 1, with the exception that the Fe²⁺ content of the feed solution varies, and both KOH and CaCO₃ are used for pH adjustment of the solution, variations of the amount of precipitated iron and precipitation efficiency, respectively, shown in Figure 7 are attained.

### Example 9

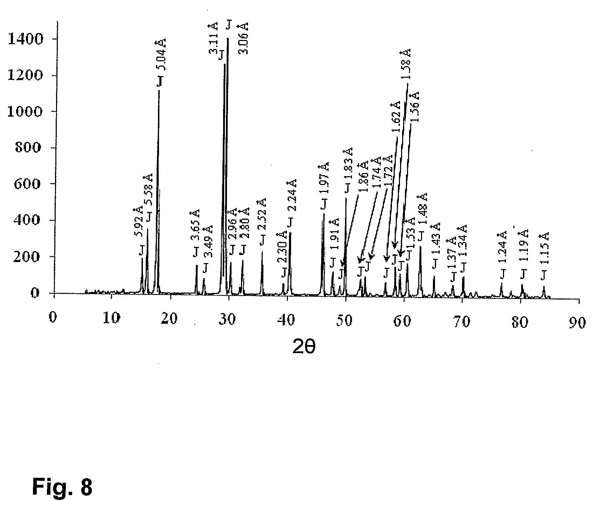

With the experimental arrangement of Example 1, with the exception that pH was adjusted with potassium hydroxide, the precipitated jarosite product was found to be mainly in the form of hydronium and potassium jarosite, as determined by X ray diffraction assay. The diffractogram is shown in Figure 8.

## Claims

1. Process for extracting iron from an aqueous acid solution containing ferrous ions wherein the process comprises the following steps:
(a) introducing the acidic feed solution containing ferrous ions to a fluidized bed reactor wherein the ferrous ions are oxidised into ferric ions, preferably using microbes, said solution being passed through the fluidized bed reactor at a flow rate of from 6 to 650 fold compared to the amount of fresh feed which flow rate is sufficient for efficient fluidization and mixing,
(b) introducing the solution from step (a), substantially containing ferric ions, to a concentrator wherein a compound containing ferric ions and sulfur is precipitated from the solution to obtain solid matter, followed by the recovery of the solid matter containing ferric ions and sulfur thus obtained
wherein the pH of the solution is adjusted downstream of the fluid bed reactor and prior to the concentrator in a separate mixing tank to a value between more than 2 and below 4.0.

2. Process according to claim 1, **characterized in that** said aqueous solution containing ferrous ions also contains sulfate ions.

3. Process according to claim 1 or 2, **characterized in that** the solid matter containing ferric ions comprises a compound of sulfur containing iron, preferably ferric sulfate, more preferably jarosite.

4. Process according to any of the claims 1-3, **characterized in that** the feed rate of the fresh solution introduced in the fluidized bed reactor is at least 0.1 l/h, preferably at least 2.4 l/h, more preferably at least 4.8 l/h, most preferably at least 9.6 l/h.

5. Process according to any of the claims 1-4, **characterized in that** a solution depleted to an extent of at least 85% of the ferric iron is obtained from step (b) and is circulated to the feed of the fluidized bed reactor of step (a).

6. Process according to claim 5, **characterized in that** prior to reintroduction in the fluidized bed reactor in step (a), said solution is aerated.

7. Process according to any of the preceding claims, **characterized in that** the pH of the solution being passed to the concentrator is adjusted to a value between more than 2.5 and below 4.0.

8. Process according to any of the preceding claims, **characterized in that** the concentration of the ferrous iron in the feed solution is 30 g/l or less, preferably between 3 and 30 g/l, more preferably between 3 and 20 g/l, most preferably between 9 and 15 g/l.

9. Process according to any of the preceding claims, **characterized in that** the oxidation rate of ferrous ions in the fluidized bed is between 1.0 and 8.5 g of Fe²⁺ l⁻¹h⁻¹.

10. Process according to any of the preceding claims, **characterized in that** it is part of a system for the precipitation of iron in a hydrometallurgical application, preferably in combination with a chemical precipitation.

11. Apparatus for the extraction of iron from aqueous acid solutions containing ferrous ions according to any one of the claims 1-10 wherein it comprises the following separate units:
(a) at least one fluidized bed reactor for oxidizing ferrous ions to yield ferric ions; and
(b) means for pH adjustment configured to adjust the pH of the solution obtained from said fluidized bed reactor and passed to a concentrator to a value between more than 2 and below 4.0, and for mixing said solution, said means for pH adjustment residing after said fluidized bed reactor and before said concentrator; and
(c) at least one concentrator connected to the fluidized bed reactor via said means for pH adjustment, for precipitating said ferric ions from the solution to give solid matter that will be collected; and
(d) means for effective circulation of the solution in the apparatus capable of providing a flow rate from 6 to 650 fold compared to the amount of fresh feed.

12. Apparatus according to claim 11, **characterized in that** it further comprises an aeration unit for aeration of the circulated solution.

13. Apparatus according to claim 11 or 12, **characterized in that** said fluidized bed reactor further comprises means for oxidizing ferrous ions said means selected from microbes, preferably *L. ferriphilum,* on carrier material, preferably activated carbon.

## Patentansprüche

1. Verfahren zum Extrahieren von Eisen aus einer wässrigen, sauren Lösung, welche Eisen(II)-Ionen enthält, wobei das Verfahren die folgenden Schritte umfasst:
(a) Einbringen der Eisen(II)-Ionen enthaltenden, sauren Beschickungslösung in einen Wirbelschichtreaktor, worin die Eisen(II)-Ionen zu Eisen(III)-Ionen oxidiert werden, vorzugsweise durch Mikroben, wobei die Lösung mit einer 6- bis 650fachen Durchflussgeschwindigkeit, im Vergleich zum Betrag der frischen Beschickungslösung, durch den Wirbelschichtreaktor geleitet wird, und wobei diese Durchflussgeschwindigkeit ausreichend ist für eine wirksame Fluidisation und Durchmischung,
(b) Einbringen der Lösung aus Schritt (a), welche im wesentlichen Eisen(III)-Ionen enthält, in einen Konzentrationsapparat, wobei eine Eisen(III)-Ionen und Schwefel enthaltende Verbindung aus der Lösung ausgefällt wird, um einen Feststoff zu erhalten, gefolgt von der Gewinnung des so erhaltenen, Eisen(III)-Ionen und Schwefel enthaltenden Feststoffs,
wobei nach dem Wirbelschichtreaktor und vor dem Konzentrationsapparat der pH der Lösung in einem separaten Mischbehälter auf einen Wert zwischen mehr als 2 und unter 4,0 eingestellt wird.

2. Verfahren nach Anspruch 1, **dadurch gekennzeichnet, dass** die genannte Lösung, welche Eisen(II)-Ionen enthält, ferner Sulfat-Ionen enthält.

3. Verfahren nach Anspruch 1 oder 2, **dadurch gekennzeichnet, dass** der Eisen(III)-Ionen enthaltende Feststoff eine eisenhaltige Schwefelverbindung enthält, vorzugsweise Eisen(III)-sulfat, stärker bevorzugt Jarosit.

4. Verfahren nach einem der Ansprüche 1 bis 3, **dadurch gekennzeichnet, dass** die Beschickungsgeschwindigkeit der in den Wirbelschichtreaktor eingebrachten frischen Lösung mindestens 0,1 l/h, vorzugsweise mindestens 2,4 l/h, stärker bevorzugt mindestens 4,8 l/h, am meisten bevorzugt 9,6 l/h beträgt.

5. Verfahren nach einem der Ansprüche 1 bis 4, **dadurch gekennzeichnet, dass** aus Schritt (b) eine Lösung erhalten wird, die in einem Ausmaß von mindestens 85 % an Eisen(III)-Ionen verarmt ist, und die in den Zulauf des Wirbelschichtreaktors von Schritt (a) zurückgeleitet wird.

6. Verfahren nach Anspruch 5, **dadurch gekennzeichnet, dass** die genannte Lösung vor ihrer Wiedereinführung in den Wirbelschichtreaktor in Schritt (a) belüftet wird.

7. Verfahren nach einem der vorangehenden Ansprüche, **dadurch gekennzeichnet, dass** der pH der in den Konzentrationsapparat weitergeleiteten Lösung auf einen Wert zwischen mehr als 2,5 und unter 4,0 eingestellt wird.

8. Verfahren nach einem der vorangehenden Ansprüche, **dadurch gekennzeichnet, dass** die Konzentration des zweiwertigen Eisens in der Beschickungslösung 30 g/l oder weniger beträgt, vorzugsweise zwischen 3 und 30 g/l, stärker bevorzugt zwischen 3 und 20 g/l, am meisten bevorzugt zwischen 9 und 15 g/l.

9. Verfahren nach einem der vorangehenden Ansprüche, **dadurch gekennzeichnet, dass** die Oxidationsgeschwindigkeit der Eisen(II)-Ionen in der Wirbelschicht zwischen 1,0 und 8,5 g Fe²⁺l⁻¹h⁻¹ liegt.

10. Verfahren nach einem der vorangehenden Ansprüche, **dadurch gekennzeichnet, dass** es ein Teil eines Systems für die Fällung von Eisen in einer hydrometallurgischen Anwendung ist, vorzugsweise in Kombination mit einer chemischen Fällung.

11. Vorrichtung für die Extraktion von Eisen aus Eisen(II)-Ionen enthaltenden, wässrigen sauren Lösungen nach einem der Ansprüche 1 bis 10, wobei die Vorrichtung die folgenden einzelnen Baueinheiten umfasst:
(a) mindestens einen Wirbelschichtreaktor für das Oxidieren von Eisen(II)-Ionen, um Eisen(III)-Ionen zu erhalten; und
(b) Mittel zum Einstellen des pH, welche für das Einstellen des pH der aus dem genannten Wirbelschichtreaktor gewonnenen und zu einem Konzentrationsapparat weitergeleiteten Lösung auf einen Wert zwischen mehr als 2 und unterhalb von 4,0 ausgelegt sind, und zum Mischen der genannten Lösung, wobei sich die genannten Mittel für die pH-Einstellung nach dem genannten Wirbelschichtreaktor und vordem genannten Konzentrationsapparat befinden; und
(c) mindestens ein Konzentrationsapparat, der über die genannten Mittel zur pH-Einstellung mit dem Wirbelschichtreaktor verbunden ist, zum Ausfällen der genannten Eisen(III)-Ionen aus der Lösung, um einen Feststoff zu erhalten, der gesammelt wird; und
(d) Mittel für ein wirksames Zirkulieren der Lösung in der Vorrichtung, geeignet zum Bereitstellen einer Durchflussgeschwindigkeit, welche das 6- bis 650fache beträgt, im Vergleich zum Betrag der frischen Beschickungslösung.

12. Vorrichtung nach Anspruch 11, **dadurch gekennzeichnet, dass** sie ferner eine Belüftungseinheit für die Belüftung der zirkulierten Lösung umfasst.

13. Vorrichtung nach Anspruch 11 oder 12, **dadurch gekennzeichnet, dass** der genannte Wirbelschichtreaktor ferner Mittel zum Oxidieren von Eisen(II)-Ionen umfasst, wobei die genannten Mittel aus Mikroben, vorzugsweise *L. ferriphilum,* auf Trägermaterial, vorzugsweise Aktivkohle, ausgewählt sind.

## Revendications

1. Procédé pour extraire du fer d'une solution acide aqueuse contenant des ions ferreux, lequel procédé comprend les étapes suivantes :
(a) introduction de la solution d'alimentation acide contenant des ions ferreux dans un réacteur à lit fluidisé dans lequel les ions ferreux sont oxydés en ions ferriques, de préférence en utilisant des microbes, ladite solution étant conduite à travers le réacteur à lit fluidisé à un débit de 6 à 650 fois par rapport à la quantité de charge fraîche dont le débit est suffisant pour obtenir une fluidisation et un mélange efficaces,
(b) introduction de la solution de l'étape (a), contenant sensiblement des ions ferriques, dans un concentrateur dans lequel un composé contenant des ions ferriques et du soufre est précipité à partir de la solution pour obtenir une matière solide, suivie de la récupération de la matière solide contenant des ions ferriques et du soufre ainsi obtenue
dans lequel le pH de la solution est ajusté en aval du réacteur à lit fluide et avant le concentrateur dans une cuve de mélange distincte à une valeur située entre plus de 2 et moins de 4,0.

2. Procédé selon la revendication 1, **caractérisé en ce que** ladite solution aqueuse contenant des ions ferreux contient également des ions sulfate.

3. Procédé selon la revendication 1 ou 2, **caractérisé en ce que** la matière solide contenant des ions ferriques comprend un composé de soufre contenant du fer, de préférence un sulfate ferrique, plus préférentiellement de la jarosite.

4. Procédé selon l'une quelconque des revendications 1 à 3, **caractérisé en ce que** le taux d'alimentation de la solution fraîche introduite dans le réacteur à lit fluidisé est d'au moins 0,1 l/h, de préférence d'au moins 2,4 l/h, plus préférentiellement d'au moins 4,8 l/h, de manière la plus préférée d'au moins 9,6 l/h.

5. Procédé selon l'une quelconque des revendications 1 à 4, **caractérisé en ce qu'**une solution appauvrie à hauteur d'au moins 85 % du fer ferrique est obtenue à partir de l'étape (b) et est mise en circulation dans l'alimentation du réacteur à lit fluidisé de l'étape (a).

6. Procédé selon la revendication 5, **caractérisé en ce qu'**avant la réintroduction dans le réacteur à lit fluidisé à l'étape (a), ladite solution est aérée.

7. Procédé selon l'une quelconque des revendications précédentes, **caractérisé en ce que** le pH de la solution étant conduite dans le concentrateur est ajusté à une valeur entre plus de 2,5 et moins de 4,0.

8. Procédé selon l'une quelconque des revendications précédentes, **caractérisé en ce que** la concentration du fer ferreux dans la solution d'alimentation est de 30 g/l ou moins, de préférence entre 3 et 30 g/l, plus préférentiellement entre 3 et 20 g/l, de manière la plus préférée entre 9 et 15 g/l.

9. Procédé selon l'une quelconque des revendications précédentes, **caractérisé en ce que** le taux d'oxydation des ions ferreux dans le lit fluidisé est situé entre 1,0 et 8,5 g de Fe²⁺ l⁻¹h⁻¹.

10. Procédé selon l'une quelconque des revendications précédentes, **caractérisé en ce qu'**il fait partie d'un système pour la précipitation du fer dans une application hydrométallurgique, de préférence en association avec une précipitation chimique.

11. Appareil pour l'extraction du fer à partir de solutions aqueuses acides contenant des ions ferreux selon l'une quelconque des revendications 1 à 10 dans lequel il comprend les unités distinctes suivantes :
(a) au moins un réacteur à lit fluidisé pour l'oxydation des ions ferreux pour donner des ions ferriques ; et
(b) des moyens d'ajustement du pH configurés pour ajuster le pH de la solution obtenue à partir dudit réacteur à lit fluidisé et conduite dans un concentrateur à une valeur entre plus de 2 et moins de 4,0, et pour mélanger ladite solution, lesdits moyens d'ajustement du pH résidant après ledit réacteur à lit fluidisé et avant ledit concentrateur ; et
(c) au moins un concentrateur raccordé au réacteur à lit fluidisé via lesdits moyens d'ajustement du pH, pour la précipitation desdits ions ferriques à partir de la solution pour donner une matière solide qui sera collectée ; et
(d) des moyens pour la circulation efficace de la solution dans l'appareil capables de produire un débit de 6 à 650 fois par rapport à la quantité de charge fraîche.

12. Appareil selon la revendication 11, **caractérisé en ce qu'**il comprend en outre un élément d'aération pour l'aération de la solution ayant circulée.

13. Appareil selon la revendication 11 ou 12, **caractérisé en ce que** ledit réacteur à lit fluidisé comprend en outre des moyens pour l'oxydation des ions ferreux, lesdits moyens étant choisis parmi des microbes, de préférence L. *ferriphilum,* sur un matériau de support, de préférence du charbon actif.
